# EUROPEAN PATENT SPECIFICATION

(11) **EP 1 589 634 B1**
(45) Date of publication and mention of the grant of the patent: **20.05.2015**
(21) Application number: 05102962.7
(22) Date of filing: 14.04.2005
(51) Int. Cl.: H02K 1/14, H02K 33/16

(54) **Stator for a linear reciprocating motor**
Stator eines Hubkolbenmotors
Stator pour un moteur alternatif linéaire

(30) Priority: 23.04.2004 IT PN20040026
(43) Date of publication of application: 26.10.2005
(73) Proprietor: ACC Compressors S.p.A., 33170 Pordenone (IT)
(72) Inventor: Cossalter, Daniele, 32032, Feltre (IT); Strappazzon, Giovanni, 36020, Pove del Grappa (Vicenza) (IT); Trivillin, Nicola, 33170, Pordenone (IT)
(74) Representative: Giugni, Valter

(56) References cited:
- DE-A1- 2 630 806
- JP-A- 10 146 037
- US-A1- 2003 080 633
- US-B1- 6 184 597

## Description

The present invention refers to stator for a linear motor.

Linear motors are generally constituted by a stator and a magnetic moving member adapted to be moved, i.e. displaced reciprocatingly by the magnetic forces that are induced between the stator and the magnetic moving member itself.

Largely known are in particular stators comprising an inner yoke and an outer yoke, having usually a cylindrical shape and arranged in such a manner as to have the outer yoke coaxially surrounding the inner yoke, thereby defining an air gap in which the moving member is arranged. In general, prior-art linear motors are known to have a structure featuring a cylindrical symmetry, in which the stator develops about a central axis, wherein the moving member is adapted to displace with a reciprocating motion along the direction of the central axis. The stator further comprises an electrically conductive coil wound round the central axis of the motor at one of the yokes and intended to be supplied with an alternating current. At least one of the two yokes has pole shoes facing the magnetic moving member, which are adapted to alternately take opposite-sign polarities when the coil is energized. The resulting attractive and repulsive magnetic forces acting on the magnetic moving member generate a thrust that is in a proportion with the intensity of the current in the coil and the density of magnetic flux in the permanent magnet that causes the moving member to displace with a reciprocating motion in the direction of the central axis in a manner that is synchronous with the frequency of the alternating current.

Known in the art is the use of a linear motor of the above-described kind for driving a linear compressor. In this particular application, the magnetic moving member is mechanically associated to a piston capable of sliding inside a cylinder that is usually positioned in correspondence to the central axis of the linear motor. The cylinder forms a compression chamber, in which the reciprocating motion of the piston, as induced by the moving member, compresses a fluid that flows into the chamber through appropriate valve means.

A known solution adopted in view of reducing eddy currents that are generated in the stator, lies in using yokes that are formed of a plurality of planar laminations that are juxtaposed, i.e. arranged close to each other as to obtain the desired geometrical conformation of the yoke.

In this connection, a prior-art yoke comprises a plurality of high magnetic-permeability laminations that are juxtaposed in such a manner as to form a complex cylindrical complex. At the end portions thereof, the laminations are conformed so as to provide an annular cavity adapted to receive - through an interference fit - a connecting ring that holds the laminations in their intended cylindrical configuration and confers the required rigidity to the whole cylindrical complex. The latter is then further associated - at an end portion thereof - to a fastening flange provided in the linear motor. Such cylindrical configuration of the yoke, however, turns out as being particularly complicated in connection with the assembly of the laminations. Furthermore, it appears as being disadvantageous as far as the efficient utilization of the volume is concerned, due to the void spaces existing between adjacent laminations.

Another kind of yoke used in the prior art is in the shape of a hollow torus, so as to be able to receive the windings of the conductive coil. This type of yoke is made either by juxtaposing a plurality of planar magnetic laminations in the shape of a C, as disclosed in the US patent publication No. 5,945,748, whose legs - once that the yoke is assembled - form the pole shoes, or by juxtaposing a plurality of planar magnetic laminations in the shape of a L that are arranged with their horizontal leg facing alternately upwards and downwards, so as to re-create a C-shaped toroidal cross-section of the yoke, as this is disclosed in the US patent publication No. 6,060,810. The laminations are held rigidly in their toroidal configuration by means of fastening rings or by welding seams along the outer surfaces of the torus. However, the presence of void spaces between mutually facing laminations is a problem even with these types of yokes.

The complexity involved in having to most accurately arrange the laminations in view of making the cylindrical and toroidal yokes of the stator is certainly one of the major drawbacks of linear motors having a cylindrical geometry, since it implies a considerable extent of manufacturing difficulties, along with a poor utilization of the available volume, deriving from limitations in the stackability or packability of the laminations, as already described above.

The US patent publication No. 6,184,597 discloses a linear motor, or a compressor using such linear motor, in which the stator comprises at least two prismatic inner yokes and an equal number of prismatic outer yokes made by stacking a plurality of laminations in an essentially rectangular shape. In each such outer yoke there are provided by machining at least three pole shoes that - between adjacent pole shoes - create slots within which the coil is wound. In this configuration, each outer yoke is provided with a coil wound about the middle pole shoe along the two slots provided between the same middle pole shoe and the adjacent ones.

By adopting a prismatic configuration of the yokes, this solution simplifies the stacking of the laminations, while ensuring a good stacking or packing efficiency in each yoke. However, the stator on its whole comes to have a structure that certainly is bulkier and less compact than the afore-described stators featuring a cylindrical/toroidal geometry, and this unavoidably leads to a general increase in the overall size of the linear motor and, ultimately, the compressor that uses such motor. Moreover, this type of stator implies a higher number of individual parts than the afore-described stators featuring a cylindrical/toroidal geometry. In fact, from two to four windings and an equal number of inner and outer yokes are required for the simplest cases of embodiment.

In addition, stators making use of prismatic yokes generally imply an increase in both manufacturing time and costs owing to the greater complexity of the operating sequences involved, i.e. the assembly of the various yokes, the provision of the pole shoes in each yoke by a machining operation, as well as winding the coils within the slots through an operation that is certainly quite complicated owing to the particular geometry of the same slots.

US 2003/0080633 A1 discloses a stator for a linear motor according to the preamble of claim 1.

Therefore, prior-art stators imply in all cases the use of manufacturing techniques that are expensive, quite complicated and taking generally a lot of time to carry out.

A further disadvantage of prior-art stators is the excessive bulkiness thereof, as well as a poor efficiency in the utilization of the available volume from a magnetic point of view.

Another disadvantage lies in the fact that a considerable amount of costly magnetic material is used in the assembly of the magnetic yokes. Furthermore, the magnetic material being so used in the form of laminations implies a great deal of scraps generated by the afore-mentioned machining operations.

Yet a further disadvantage of prior-art stators lies in the poor rigidity and robustness thereof, deriving from their structure being formed of a plurality of stacked and juxtaposed laminations.

It therefore is a main object of the present invention to provide a stator that does away with all of the afore-mentioned drawbacks of prior-art stators.

A major purpose of the present invention within the above-indicated object thereof is to provide a stator that is simple in construction and capable of being manufactured using easily performed production and assembly techniques at fully competitive costs.

Another major purpose of the present invention is to provide a stator which has an extremely compact structure that takes up just a small amount of space and reduces unused volumes to a minimum, with particular reference to applications involving an use in refrigeration and air-conditioning compressor.

A last, although not least purpose of the present invention is to provide a stator that is high in reliability.

According to the present invention, the above indicated aims and advantages, along with further ones that will become apparent from the description given below, are reached in a stator incorporating the features and characteristics as recited in the appended claims 1 et seq.

Anyway, features and advantages of the present invention may be more readily understood from the description that is given below of a preferred, although not sole embodiment, which is illustrated by way of non-limiting example with reference to the accompanying drawings, in which:

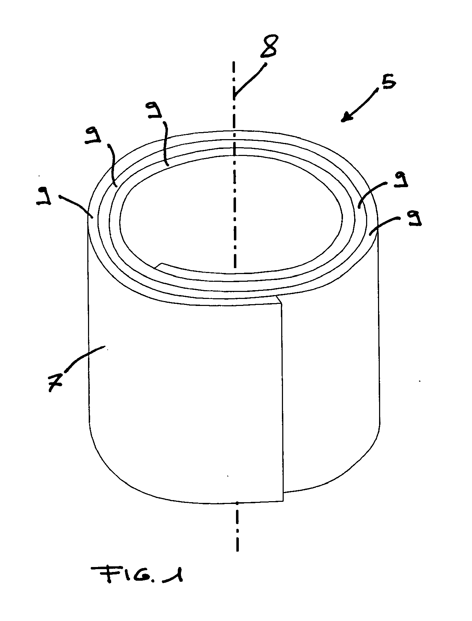

- Figure 1 is a perspective view of a magnetic member according to the present invention;

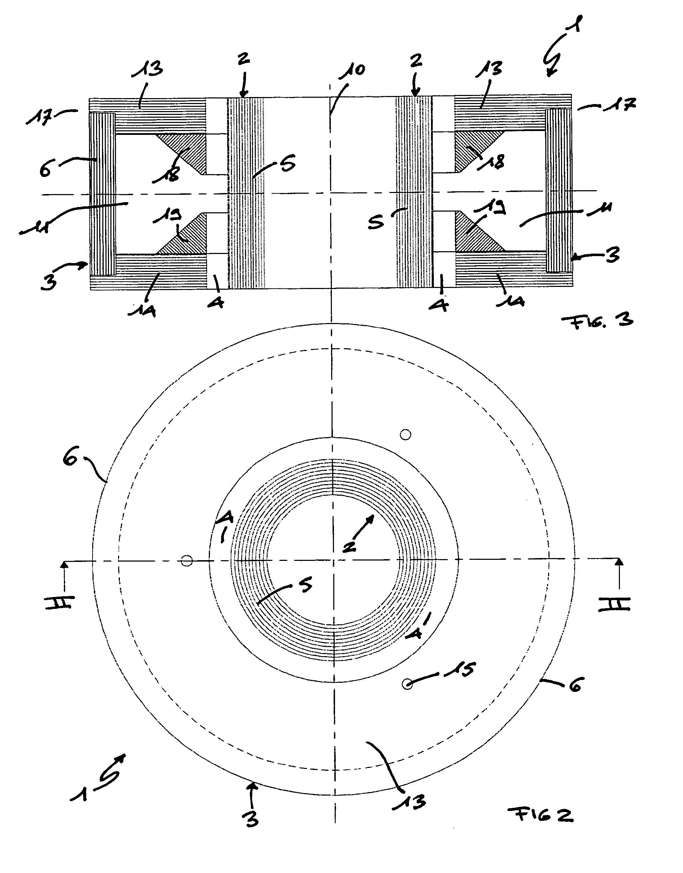

- Figure 2 is a top plan view of a stator according to the present invention;
- Figure 3 is a cross-sectional view of the stator shown in Figure 2, as viewed along the line II-II;
- Figure 4 is a perspective exploded view of the main component parts of the motor;
- Figure 5 is a partial cross-sectional view of the stator according to the present invention, in which there are indicated the lines of flux.

With reference to the Figures cited and listed above, the stator for linear motors, as generally indicated at 1, comprises at least an inner yoke 2 and at least an outer yoke 3 that are so arranged as to define an air gap 4 therebetween. According to the present invention, at least one of said yokes 2 and 3 comprises a magnetic member 5, 6 formed of at least a sheet-metal strip 7 that is coiled up, i.e. wound on itself about a longitudinal axis 8. The magnetic member 5, 6 is in this way constituted essentially by a plurality of layers 9 of the sheet-metal strip 7, which lie radially upon each other relative to said longitudinal axis 8.

In this particular example of embodiment, the stator has a cylindrical configuration developing around a central axis 10 of a linear motor, in which the outer yoke 3 is arranged coaxially around the inner yoke 2. The yokes 2, 3 are sized such that between the outer cylindrical surface of the inner yoke 2 and the inner cylindrical surface of the outer yoke 3 there is formed the air gap 4, within which there is arranged, in a generally known manner, the moving member (not shown) of the electric motor.

The inner yoke 2 is formed integrally of a magnetic member 5, which is comprised of a sheet-metal strip 7, of a magnetic material, that is coiled up, i.e. wound on itself about a longitudinal axis 8, so as to form a cylindrical body whose axis coincides with said longitudinal axis 8. This cylindrical body has a side wall that is in this way constituted by a plurality of layers 9 of the sheet-metal strip 7, which lie annularly upon each other in a radial direction relative to said longitudinal axis 8.

Once the stator is assembled in the process of making the linear motor, the longitudinal axis 8 of the inner yoke 2 comes to coincide with the central axis 10 such that the inner yoke 2, which is hollow, is adapted to receive and accommodate a cylinder/piston structure, in which the piston is capable of being slidably driven by the moving member of the linear motor, thereby defining a linear compressor, as this shall be explained in greater detail further on.

Notwithstanding the fact that, in the described example, the inner yoke 2 is shown to feature a circular and, in particular, spiral-like cross-sectional geometry relative to the longitudinal axis 8, it will nonetheless be readily appreciated that various other configurations may be contemplated in this connection, such as for instance a square or, more generally, polygonal cross-sectional shape.

The outer yoke 3, which is arranged coaxially around the inner yoke 2, is itself given a cylindrical conformation, wherein its axis is centred on the central axis 10. The cross-section of the outer yoke 3, along the central axis 10, has a substantially C-shaped configuration, so as to form an annular cavity 11, in which a coil 12 of conductive material is wound. The outer yoke 3 comprises a magnetic member 3 formed of a sheet-metal strip 7, of a magnetic material, that is coiled up, i.e. wound on itself about a longitudinal axis 8, so as to form a cylindrical body whose axis coincides with said longitudinal axis 8. This cylindrical body has a side wall that is in this way constituted by a plurality of layers 9 of the sheet-metal strip 7, which lie annularly upon each other in a radial direction relative to said longitudinal axis 8. The magnetic member 6 forms the cylindrical wall of the outer yoke 3.

The outer yoke 3 further comprises a first circular crown 13 and a second circular crown 14, which are associated on top and at the bottom, respectively, to the magnetic member 6 to form the annular cavity 11. Each one of said circular crowns 13, 14 is formed of a number of magnetic laminations 16, which are stacked upon and locked to each other by means of pegs 15. The laminations 16 are shaped such that the circular crowns 13, 14 feature a circular outer rim having a lower-profiled cross-section forming an annular abutment step 17, by means of which the circular crowns 13, 14 are capable of being snap-fitted onto the magnetic member 6.

The outer yoke 3 also comprises a first magnetic ring 18 and a second magnetic ring 19 that are associated to the upper circular crown 13 and the lower circular crown 14, respectively, in such a manner as to face each other and be accommodated inside the cavity 11 formed by the crowns 13, 14 and the magnetic member 6. The rings 18 and 19 have a convergingly profiled cross-section so as to be able to substantially close and seal the annular cavity 11, thereby forming the pole shoes of the linear motor. In the example being described, the rings are of solid magnetic material having a triangular cross-section. The rings 18 and 19 are held in position by means of properly shaped members (not shown) that are used to electrically insulate the conductive coil 12 inside the annular slot 11 from the magnetic walls of the outer yoke 3.

It will be readily appreciated that, according to the present invention, the positions of the inner yoke 2 and the outer yoke 3 forming the stator of the linear motor may be exchanged.

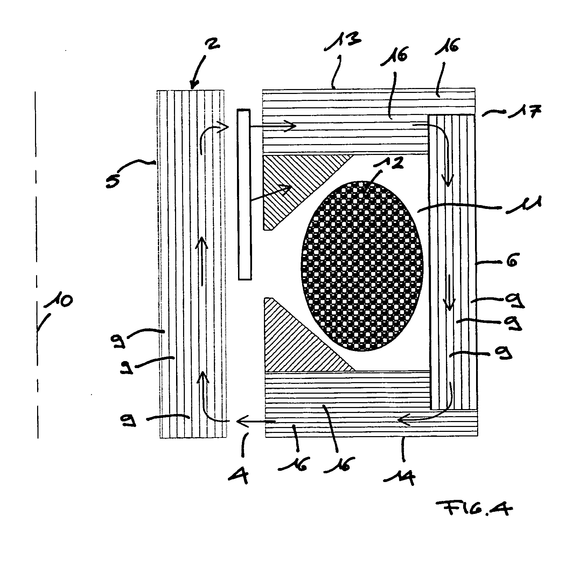

According to the present invention, and as indicated in Figure 4, the magnetic flux induced by the current applied in the coil 12 passes across the stator in such a manner as to flow parallelly through the layers 9 that form the magnetic members 5 and 6, and parallelly through the laminations 16 that form the upper and lower circular crowns 13 and 14. In an advantageous manner, this allows eddy-current losses in the yokes 2 and 3to be kept within acceptable limits, wherein said losses would on the contrary be quite high in the case that the stator is simply made with members of solid material without stacked layers.

The pathway followed by the magnetic flux moving across the stator is closed by a cylindrical permanent magnet, which the moving member arranged in the air gap 4 is provided with.

In operation, when the conductive coil 12 is energized, i.e. supplied with an alternating current, the pole shoes, which are formed by the rings 18 and 19 and the inner periphery of the circular crowns 13 and 14, take polarities of an alternately opposite sign, and the resulting attractive and repulsive magnetic force acting on the permanent magnet generates a thrust that is in a proportion with the intensity of the current in the coil 12 and the density of the magnetic flux in the permanent magnet, so as to cause the moving member to reciprocatingly displace in the direction of the central axis 10 in a manner that is synchronous with the frequency of the alternating current being applied.

The linear motor that comprises a stator according to the present invention is adapted to be applied in a linear compressor. Such linear compressor compresses a gas by means of a piston driven by the moving member of the linear motor. The piston slides reciprocatingly in the direction of the central axis 10 inside a cylinder that is arranged in the hollow portion of the inner yoke 2 and is in communication with a gas compression chamber.

From the description given above it can therefore be readily appreciated that the present invention is actually capable of reaching all of the afore indicated aims and advantages by providing a stator that is extremely simple in its structure, as well as easily manufactured at much lower costs through the use of readily available, existing techniques and materials.

The stator according to the present invention is provided with extremely compact magnetic yokes of a cylindrical configuration, without any of the void spaces characterizing prior-art yokes in general, whereby the available volume is used to a maximum extent and the possibility is given for linear motors to be made, which are definitely more compact in size than those currently available on the market and, therefore, definitely more advantageous in view of an application thereof in refrigeration and air-conditioning compressors.

The reduced size of the stator further allows a smaller amount of magnetic material - which is largely known to be quite expensive - to be actually used in manufacturing the same stator.

In addition, the stator according to the present invention enables the use of laminations having particularly shaped contours to be reduced to a considerable extent, thereby reducing the amount of magnetic material being wasted due to manufacturing scraps.

It will of course be appreciated that the stator according to the present invention may be subject to a number of modifications and variants, and may be used in conjunction with a number of different applications, without departing from the scope of the present invention as defined by the appended claims.

It should further be noticed that the materials used to implement the present invention, as well as the shapes and the size of the individual component parts, may each time be selected so as to most appropriately fit any particular need or comply with any application-related requirement, without this implying any departure from the scope of the present invention as defined by the appended claims.

## Claims

1. Stator for a linear motor comprising at least a first magnetic yoke (2) and at least a second magnetic yoke (3) arranged in such a manner as to define an air gap (4) therebetween, at least one of said yokes (2, 3) comprising at least one magnetic member (5, 6) formed of at least a sheet-metal strip (7) that is coiled up, i.e. wound on itself about a longitudinal axis (8), said sheet-metal strip (7) defining a plurality of layers (9) stacked upon each other radially relative to said longitudinal axis (8), said second yoke (3) comprising an annular cavity (11) adapted to accommodate a magnetic coil (12) **characterised in that** the annular cavity is adapted to accommodate at least a crown (13, 14) associated to said magnetic member (6) to form said annular cavity (11), said crown (13, 14) being formed of a plurality of magnetic laminations (16), which are stacked upon and locked to each other by means of fastening means (15), said laminations (16) are shaped such that the crown (13, 14) defines an outer abutment rim (17), by means of which the crown (13, 14) is capable of being mechanically fastened onto said magnetic member (5, 6).

2. Stator according to claim 1, **characterized in that** said magnetic member (5, 6) has a cross-section featuring a spiral-like conformation relative to said longitudinal axis (8).

3. Stator according to claim 1, **characterized in that** said magnetic member (5, 6) has a cross-section featuring a polygonal geometry relative to said longitudinal axis (8).

4. Stator according to claim 2, **characterized in that** said magnetic member (5, 6) comprises a cylindrical wall formed by the layers (9) of said sheet-metal strip (7) that are stacked annularly upon each other in a radial direction relative to said longitudinal axis (8).

5. Stator according to any of the preceding claims 2 to 4, individually or in any combination thereof, **characterized in that** said first yoke (2) is constituted by said magnetic member (5, 6).

6. Stator according to claim 1, **characterized in that** said second yoke (3) further comprises at least a magnetic ring (18) associated to said crown (13, 14) inside the cavity (11) to form corresponding pole shoes.

7. Stator according to any of the preceding claims, individually or in any combination thereof, **characterized in that** the magnetic flux induced by the coil (12) passes across said yoke (2, 3) in such a manner as to flow parallel through the stacked layers (9) of the magnetic member (5, 6).

8. Linear motor comprising a stator according to any of the preceding claims.

9. Compressor driven by a linear motor according to claim 8.

## Patentansprüche

1. Stator für einen Linearmotor, umfassend mindestens ein erstes magnetisches Joch (2) und mindestens ein zweites magnetisches Joch (3), die so angeordnet sind, dass sie zwischen einander einen Luftspalt (4) definieren, wobei mindestens eines der Joche (2, 3) mindestens ein magnetisches Element (5, 6) umfasst, das aus mindestens einem Blechstreifen (7) besteht, der aufgewickelt ist, d. h. um eine Längsachse (8) um sich selbst gewunden ist, wobei der Blechstreifen (7) eine Vielzahl von Schichten (9) definiert, die radial relativ zu der Längsachse (8) aufeinander gestapelt sind, wobei das zweite Joch (3) einen ringförmigen Hohlraum (11) umfasst, der dazu eingerichtet ist, eine Magnetspule (12) aufzunehmen, **dadurch gekennzeichnet, dass** der ringförmige Hohlraum dazu eingerichtet ist, mindestens einen Kopfteil (13, 14) aufzunehmen, der zu dem magnetischen Element (6) gehört, um den ringförmigen Hohlraum (11) zu bilden, wobei der Kopfteil (13, 14) aus einer Vielzahl von magnetischen Laminaten (16) besteht, die aufeinander gestapelt sind und mithilfe von Befestigungsmitteln (15) aneinander befestigt sind, wobei die Laminate (16) so geformt sind, dass der Kopfteil (13, 14) einen äußeren Auflagerand (17) definiert, mithilfe dessen der Kopfteil (13, 14) mechanisch an dem magnetischen Element (5, 6) befestigt werden kann.

2. Stator nach Anspruch 1, **dadurch gekennzeichnet, dass** das magnetische Element (5, 6) einen Querschnitt mit einer spiralförmigen Form relativ zu der Längsachse (8) aufweist.

3. Stator nach Anspruch 1, **dadurch gekennzeichnet, dass** das magnetische Element (5, 6) einen Querschnitt mit einer polygonalen Geometrie relativ zu der Längsachse (8) aufweist.

4. Stator nach Anspruch 2, **dadurch gekennzeichnet, dass** das magnetische Element (5, 6) eine zylindrische Wand umfasst, die von den Schichten (9) des Blechstreifens (7) gebildet wird, welche in einer radialen Richtung relativ zu der Längsachse (8) ringförmig aufeinander gestapelt sind.

5. Stator nach einem der vorhergehenden Ansprüche 2 bis 4, individuell oder in einer Kombination daraus, **dadurch gekennzeichnet, dass** das erste Joch (2) von dem magnetischen Element (5, 6) gebildet wird.

6. Stator nach Anspruch 1, **dadurch gekennzeichnet, dass** das zweite Joch (3) des Weiteren mindestens einen magnetischen Ring (18) umfasst, der zu dem Kopfteil (13, 14) in dem Hohlraum (11) gehört, um entsprechende Polschuhe zu bilden.

7. Stator nach einem der vorhergehenden Ansprüche, individuell oder in einer Kombination daraus, **dadurch gekennzeichnet, dass** der von der Spule (12) induzierte Magnetfluss das Joch (2, 3) solcherart durchläuft, dass er parallel durch die gestapelten Schichten (9) des magnetischen Elements (5, 6) fließt.

8. Linearmotor, umfassend eine Stator nach einem der vorhergehenden Ansprüche.

9. Kompressor, der von einem Linearmotor nach Anspruch 8 angetrieben wird.

## Revendications

1. Stator pour un moteur linéaire comprenant au moins une première culasse magnétique (2) et au moins une seconde culasse magnétique (3) disposées de manière à définir un entrefer (4) entre eux, au moins l'une desdites culasses (2, 3) comprenant au moins un élément magnétique (5, 6) formé d'au moins une bande de tôle (7) qui est enroulée, par exemple enroulée sur elle-même autour d'un axe longitudinal (8), ladite bande de tôle (7) définissant une pluralité de couches (9) empilées radialement les unes sur les autres par rapport audit axe longitudinal (8), ladite seconde culasse (3) comprenant une cavité annulaire (11) adaptée pour loger une bobine magnétique (12), **caractérisé en ce que** la cavité annulaire est adaptée pour loger au moins une couronne (13, 14) associée audit élément magnétique (6) pour former ladite cavité annulaire (11), ladite couronne (13, 14) étant formée d'une pluralité de lamelles magnétiques (16), qui sont empilées les unes sur les autres et verrouillées les unes aux autres par des moyens de fixation (15), lesdites lamelles (16) sont formées de telle sorte que la couronne (13, 14) définit un rebord de butée extérieure (17), au moyen duquel la couronne (13, 14) est susceptible d'être mécaniquement fixée sur ledit élément magnétique (5, 6).

2. Stator selon la revendication 1, **caractérisé en ce que** ledit élément magnétique (5, 6) présente une section transversale avec une conformation en spirale par rapport audit axe longitudinal (8).

3. Stator selon la revendication 1, **caractérisé en ce que** ledit élément magnétique (5, 6) présente une section transversale avec une géométrie polygonale par rapport audit axe longitudinal (8).

4. Stator selon la revendication 2, **caractérisé en ce que** ledit élément magnétique (5, 6) comprend une paroi cylindrique formée par les couches (9) de ladite bande de tôle (7) qui sont empilées les unes sur les autres de manière annulaire dans une direction radiale par rapport audit axe longitudinal (8).

5. Stator selon l'une quelconque des précédentes revendications 2 à 4, considérée individuellement ou en une combinaison quelconque de celles-ci, **caractérisé en ce que** ladite première culasse (2) est constituée par ledit élément magnétique (5, 6).

6. Stator selon la revendication 1, **caractérisé en ce que** ladite seconde culasse (3) comprend en outre au moins un anneau magnétique (18) associé à ladite couronne (13, 14) à l'intérieur de la cavité (11) pour former des noyaux polaires correspondants.

7. Stator selon l'une quelconque des revendications précédentes, considérée individuellement ou en une combinaison quelconque de celles-ci, **caractérisé en ce que** le flux magnétique induit par la bobine (12) passe à travers ladite culasse (2, 3) de telle manière à s'écouler en parallèle à travers les couches empilées (9) de l'élément magnétique (5, 6).

8. Moteur linéaire comprenant un stator selon l'une quelconque des revendications précédentes.

9. Compresseur entraîné par un moteur linéaire selon la revendication 8.
